# EUROPÄISCHE PATENTSCHRIFT

(11) **EP 2 520 845 B1**
(45) Veröffentlichungstag und Bekanntmachung des Hinweises auf die Patenterteilung: **04.12.2013**
(21) Anmeldenummer: 12003034.1
(22) Anmeldetag: 30.04.2012
(51) Int. Cl.: F16M 13/02, F16M 13/00

(54) **Portables Halterungssystem für elektronische Geräte**
Portable holder system for electronic equipment
Système de support portable pour appareils électroniques

(30) Priorität: 03.05.2011 DE 102011100308
(43) Veröffentlichungstag der Anmeldung: 07.11.2012
(73) Patentinhaber: Klepsch, Thomas, 6073 Sistrans (AT); Siebenförcher, David, 6020 Innsbruck (AT)
(72) Erfinder: Siebenförcher, David, 6020 Innsbruck (AT)
(74) Vertreter: Herrmann, Uwe

(56) Entgegenhaltungen:
- US-A- 5 350 147
- US-A- 5 810 313
- US-A- 6 073 902

## Beschreibung

Die Erfindung betrifft ein portables Halterungssystem für elektronische Geräte, sowie die Verwendung eines solchen portablen Halterungssystems zum Anbringen eines elektronischen Gerätes.

Der Markt für Smartphones und Tablet-Computer ist derzeit einer der größten Wachstumsmärkte weltweit. In den nächsten Jahren werden 90% aller Mobiltelefone Smartphones sein. Mittlerweile werden im gleichen Zeitraum bereits mehr Smartphones als PCs verkauft.

Bei der Benutzung von derartigen Geräten wird normalerweise eine Hand zum Halten und die andere Hand zum Bedienen verwendet, und bei deren Verwendung als Multimediageräte lassen sie sich nur hinlegen, allerdings nicht hinstellen.

Um eine variable Stellung des Bildschirms oder eine einhändige Bedienung zu ermöglichen, sind daher verschiedene Halterungssysteme entwickelt worden, siehe zum Beispiel US 5 350 147.

So ist es beispielsweise bekannt, die Geräte in einen Rahmen einzufassen, der mit einem Ständer in Verbindung steht, oder an beispielsweise einer Wand oder einer Armatur eines Autos anbringbar ist. Derartige Produkte sind jedoch vielfach nicht optimal für den Transport geeignet und kaum flexibel einsetzbar. Eine Halterung mit einem Stativ eignet sich beispielsweise nicht dafür, das Smartphone auf einem weichen oder unebenen Grund in Position zu halten, wie beispielsweise auf einem Sofa, einer Matratze oder in einer Wiese.

Aufgabe der Erfindung ist es, ein gattungsgemäßes Halterungssystem bereitzustellen, welches transportabel und zudem flexibel einsetzbar ist.

Diese Aufgabe wird mit einem portablen Halterungssystem gemäß Anspruch 1 gelöst. Vorteilhafte Ausgestaltungen ergeben sich aus den Unteransprüchen.

So ist erfindungsgemäß ein portables Halterungssystem für elektronische Geräte vorgesehen, welches eine Halterung mit einer Adhäsionsoberfläche aufweist, wobei diese Halterung mittelbar oder unmittelbar mit einem plastisch verformbaren Körper in Verbindung steht. Die Halterung kann auch direkt einen Teil des plastisch verformbaren Körpers bilden. Die Adhäsionsoberfläche ist so ausgebildet, dass die zu befestigenden elektronischen Geräte adhäsiv und reversibel daran anbringbar sind.

Das portable Halterungssystem eignet sich insbesondere zum Befestigen beziehungsweise Anbringen beziehungsweise Halten von Mobiltelefonen, vorzugsweise Smartphones, und Tablet-Computern. Prominente derzeit am Markt befindliche Beispiele sind das iPhone® und das iPad® von Apple. Für die reversible Haftung an der Adhäsionsoberfläche sind solche elektronischen Geräte mit einer glatten Rückseite, d. h. einer glatten dem Anzeige- und/oder Bedienelement abgewandten Seite, bevorzugt. Auch der Einsatz zum Anbringen von anderen Bildschirmen (portable DVD-Player, etc.) und/oder Bedienelementen (Fernbedienungen, etc.) und/oder Kameras ist jedoch vom zweckmäßigen Gebrauch des erfindungsgemäßen Halterungssystems umfasst.

Durch die Verwendung des plastisch verformbaren Körpers als Verbindungselement zwischen Halterung und dem Untergrund ist das erfindungsgemäße Halterungssystem in seiner Lage und Ausrichtung unbeschränkt flexibel und kann auf verschiedensten Oberflächen verwendet werden. Durch seine kompakte Form und handliche Bauart ist es gegenüber mechanischen Belastungen relativ unempfindlich und lässt sich einfach und unkompliziert transportieren. So kann es beispielsweise als Halterung für ein Smartphone oder einen Tablet-Computer auf einem Tisch, jedoch auch auf einer Couch oder einer Wiese dienen. Die Position des Anzeigeschirms kann dabei stufenlos in die gewünschte Position gebracht werden und eine Positionsstabilität ist stets gewährleistet. Die Halterung ist im Falle von Smartphones mit Fotofunktion oder im Falle von Kameras auch als Stativ geeignet. Ferner kann durch während dem freihändigen Telefonieren (das Telefon wird zwischen Schulter und Ohr eingeklemmt) der Abstand vom Ohr zur Schulter verringert werden, was den Nacken entlastet.

Im Rahmen der vorliegenden Erfindung ist der mit der Adhäsionsoberfläche assoziierte Begriff der *"Adhäsion"* nicht streng auf das Prinzip der Anziehungskraft von Molekülen zwischen der Adhäsionsoberfläche und dem elektronischen Gerät beschränkt, sondern umfasst vielmehr jede Art einer nichtklebenden und nichtmagnetischen Haftoberfläche. Die Haftung des Gerätes an der Halterung basiert also auf einer klebstofffreien Adhäsion, sodass das elektronische Gerät im Pick- and Place-Verfahren mit beliebig häufiger Wiederholung an der Halterung angebracht und davon entnommen werden. Durch die klebstofffreie Adhäsionsoberfläche werden dabei am elektronischen Gerät keinerlei Klebstoffspuren oder sonstige störende Spuren hinterlassen.

In einer Ausführungsform weist die Adhäsionsoberfläche eine Oberflächenstruktur mit Erhebungen und/oder Vertiefungen auf, deren Höhe und/oder Abstand zueinander weniger als 50 µm beträgt. Die Struktur kann in einem vorzugsweise elastisch verformbaren Kunststoffmaterial imprägniert beziehungsweise darauf aufgetragen sein. Eine derartige Oberflächenstruktur im Mikrometerbereich beziehungsweise Nanometerbereich wird oft als *"nanobeschichtete Oberfläche"* oder *"Nano-Haftschicht"* bezeichnet. Durch Ausbildung von van-der-Waals-Kräften und/oder eines Vakuums kann mit Hilfe einer derartigen Oberflächenstruktur eine adhäsive Bindung mit einer vorzugsweise glatten Oberfläche eines elektronischen Bauteils erreicht werden. Solche Oberflächen weisen zudem den Vorteil eines selbstreinigenden Effekts auf und sind im allgemeinen sehr einfach zu reinigen, was durch den bekannten Lotus-Effekt bedingt ist. So ist das erfindungsgemäße Halterungssystem in dieser Ausführungsform gegenüber Verschmutzungen unempfindlich.

In einer Ausführungsform ist die Oberfläche gegenüber der Dicke der Halterung sehr dünn (weniger als etwa 1/100 und vorzugsweise weniger als etwa 1/1000) ausgebildet.

Geeignete erhabene Oberflächenstrukturen umfassen beispielsweise Lamellen, Härchen, Stege oder Warzen. Geeignete Vertiefungen umfassen beispielsweise Rillen oder Löcher. Die Höhe dieser Erhebungen und/oder Tiefe der Vertiefungen beträgt in einer Ausführungsform weniger als etwa 10 µm und kann auch weniger als etwa 1 µm betragen. Der Abstand einzelner Erhebungen und/oder Vertiefungen zueinander kann weniger als etwa 20 µm, weniger als etwa 5 µm oder auch weniger als etwa 500 nm betragen.

Bevorzugt ist der Einsatz einer Nano-Haftschicht, deren Haftprinzip auf einer ein Vakuum erzeugenden Oberfläche beruht. Dies wird durch eine Vielzahl von Vertiefungen an der Oberfläche erreicht. Einzelne dieser Vertiefungen bilden beim Andrücken der glatten Fläche eines elektronischen Gerätes kleine, örtliche Vakuums, die in Summe eine beträchtliche Haftkraft bewirken.

Ein alternatives und ebenfalls von der Erfindung umfasstes Beispiel ist eine Oberfläche mit sehr feinen, weniger als etwa 500 nm langen und nur wenige Nanometer dicken Härchen, welche dicht aneinanderliegend in großer Anzahl die Oberfläche bedecken. Diese bilden durch van-der-Waals-Kräfte eine Haftung an verschiedensten Oberflächen aus.

In einer Ausführungsform weist die Adhäsionsoberfläche ein Haftmaterial wie insbesondere Haftsilikon auf. Die Adhäsionsoberfläche kann auch aus einem derartigen Material bestehen. Gegebenenfalls ist darauf eine oben beschriebene Nano-Beschichtung aufgebracht, die Haftung kann aber auch allein durch intermolekulare Kräfte wie van-der-Waals-Kräfte erfolgen. Geeignete Beschichtungen umfassen eine haftende Silikon-Beschichtung sowie Elastomere wie beispielsweise Blockcopolymere auf Styrol- und/oder Ethylen- und/oder Propylen- und/oder Butylen-Basis, Polyurethane, Acrylate und Mischungen daraus.

Geeignete Haftstärken der Adhäsionsoberfläche umfassen beispielsweise zwischen etwa 10 und etwa 1000 N/m², vorzugsweise zwischen etwa 50 und etwa 500 N/m² bei Wechselwirkung mit einer glatten Glasoberfläche.

Generell ist bei der Auswahl der Adhäsionsoberfläche vorzugsweise zu beachten, dass diese keine Rückstände am Smartphone hinterlässt, einfach zu reinigen ist, keine Ermüdung der Adhäsionseigenschaften bei wiederholtem Gebrauch zeigt und insbesondere ein reversibles Abnehmen und Anbringen des elektronischen Gerätes im Pick- und Place-Verfahren ermöglicht.

In einer Ausführungsform ist der plastisch verformbare Körper ein plastisch verformbares Kissen bestehend aus einem Überzug und einem Füllmaterial, vorzugsweise einem kleinteiligen und kompakten Füllmaterial.

Insbesondere geeignet ist ein mit Granulaten gefüllter Überzug, vorzugsweise Stoffsack, der umgangssprachlich oft als *"Bean Bag*" bezeichnet wird. Die Granulate beziehungsweise kleinteiligen, körnigen Materialien können einen mittleren Durchmesser von zwischen etwa 1 cm und etwa 0,01 mm aufweisen. Bevorzugte Größen umfassen einen mittleren Durchmesser von größer etwa 0,1 mm oder größer etwa 1 mm, beziehungsweise kleiner etwa 0,5 cm oder kleiner etwa 0,3 mm. Die Granulate können annähernd kugelförmig oder kugelförmig sein. Beispiele für geeignete Füllmaterialen umfassen Mineralgranulat, Glaskugeln, Glasgranulat, Kunststoffgranulat, kleine Steine, Getreidesamen wie beispielsweise Hanfsamen oder Reis, Bohnen, Erbsen, Mais etc. Kunststoffgranulat und Glasgranulat sind besonders bevorzugt, da dessen Einsatz ein einfaches Waschen des portablen Halterungssystems mit Wasser oder auch in der Waschmaschine ermöglicht. Auch pulverförmige Materialien wie Glaspulver, Mehl oder Sand eignen sich als Füllmaterial.

Der Überzug ist vorzugsweise sackförmig und kann aus einer Kunststofffolie oder aus einem Stoff bestehen, vorzugsweise einem beispielsweise gewobenen oder gestrickten Gewebe oder auch einem Filz aus Kunstfasern und/oder Naturfasern. Bevorzugt ist der Einsatz eines weichen und elastischen Gewebes, beispielsweise einem sogenannten *"Jersey-Stoff'.* Geeignete Naturfasern umfassen Wolle, Baumwolle, Seide oder Viskose. Geeignete Kunstfasern umfassen Polyester oder Polyacryl.

Das Volumen des plastisch verformbaren Körpers beziehungsweise das Füllvolumen des Kissens kann je nach vorgesehenem Einsatz (Smartphone, Tabletcomputer) unterschiedlich sein. So kann das Volumen beziehungsweise Füllvolumen in einer Ausführungsform zwischen etwa 100 cm³ und etwa 1.000 cm³ betragen, und in einer anderen Ausführungsform zwischen etwa 5.000 cm³ und etwa 15.000 cm³.

In einer Ausführungsform gemäß Anspruch 1 ist der Körper beziehungsweise das Kissen an seiner Außenoberfläche wenigstens abschnittsweise mit einer Beschichtung und/oder einem Aufdruck versehen, der beziehungsweise die als eine Antirutschbeschichtung dienen und insbesondere beim Abstellen des Halterungssystems auf einer Fahrzeugarmatur oder auf glatten, rutschigen Oberflächen von Vorteil sein können. Bevorzugt ist ein Aufdruck aus Silikonmaterialien, Latex oder Kautschuk. Die Antirutschbeschichtung kann in verschiedenen Mustern wie beispielsweise Hexagonen, Quadraten und ähnlichem aufgebracht sein oder auch die Außenoberfläche des Körpers beziehungsweise Kissens durchgehend überziehen. Die Stärke (Auftragungsdicke) des Aufdrucks beziehungsweise der Beschichtung beträgt in einer Ausführungsform zwischen etwa 0,01 mm und etwa 5 mm. Weitere geeignete Werte für die Auftragungsdicke umfassen Dicken größer als etwa 0,1 mm oder größer als etwa 0,5 mm, beziehungsweise kleiner als etwa 3 mm oder kleiner als etwa 1 mm.

Alternativ oder zusätzlich kann der Überzug des Kissens auch selbst haftende Eigenschaften aufweisen.

In einer Ausführungsform weist das Kissen im Ausgangszustand eine im Wesentlichen oder auch exakt ellipsoide Gestalt auf, wobei die Halterung und/oder die Adhäsionsoberfläche parallel zur Längsachse verläuft und einen Teil des Ellipsoides abschneidet.

In einer Ausführungsform bindet die Halterung einen Teil der Begrenzungsfläche des Kissens. Dabei kann die Halterung mit dem Überzug des Kissens verbunden sein, und an der von der Adhäsionsoberfläche abgewandten Seite mit dem Füllmaterial in Kontakt stehen. Die Platte der Halterung bildet in dieser Ausführungsform also einen Teil des Überzugs beziehungsweise der Begrenzung, in dem sich das Füllmaterial befindet.

In einer Ausführungsform ist die Halterung mit der Außenoberfläche des Überzugs des Kissens verbunden. Dabei bilden der Überzug und das Füllmaterial ein in sich geschlossenes System, an dem die Halterung äußerlich befestigt ist. Die Halterung steht so nicht direkt mit dem Füllmaterial in Kontakt.

Geeignete Arten der Verbindung des Überzugs mit der Halterung umfassen ein Vernähen, ein Verschweißen, ein Verkleben, ein Verklammern und ähnliches.

In einer Ausführungsform ist die Halterung beziehungsweise der Übergangsbereich zwischen der Halterung und dem Kissen an wenigstens einer Seite und vorzugsweise an allen Seiten von einer Blende umgeben. So kann unter anderem ein optisch unansprechedner Übergang zwischen dem Kissen und der Halterung oder Schichten innerhalb der Halterung kaschiert werden. Ferner kann eine derartige Blende zur Haltbarkeit des Produkts und/oder zur Formgebung des Kissens beitragen.

Die Erfindung betrifft ferner die Verwendung eines erfindungsgemäßen Halterungssystems zum Anbringen beziehungsweise Befestigen beziehungsweise Halten eines elektronischen Gerätes, insbesondere eines Mobiltelefons oder eines Tablet-Computers.

Insbesondere eignet es sich zur Halterung von Mobiltelefonen, vorzugsweise Smartphones, und Tablet-Computern. Prominente derzeit am Markt befindliche Beispiele sind das iPhone® und das iPad® von Apple. Für die reversible Haftung an der Adhäsionsoberfläche sind solche elektronischen Geräte mit einer glatten Rückseite, d. h. einer glatten dem Anzeige- und/oder Bedienelement abgewandten Seite, bevorzugt. Auch der Einsatz zum Anbringen von anderen Bildschirmen (portable DVD-Player, etc.) und/oder Bedienelementen (Fernbedienungen, etc.) und/oder Kameras ist jedoch von der erfindungsgemäßen Verwendung umfasst. Wie bereits im Zusammenhang mit dem erfindungsgemäßen Halterungssystem diskutiert, ist das System durch die Verwendung des plastisch verformbaren Kissens als Verbindungselement zwischen Halterung und Untergrund in seiner Lage und Ausrichtung flexibel und kann auf verschiedensten Oberflächen verwendet werden. Besondere Vorteile gegenüber vorbekannten Bauarten entfalten sich unter anderem beim Aufstellen auf unebenen Oberflächen (Rasen, Bett, Sofa) sowie in beweglichen Objekten (Autoarmatur).

Weitere Einzelheiten und Vorteile der Erfindung ergeben sich aus den nachfolgenden anhand der Figuren und beschriebenen Ausführungsbeispielen. In den Figuren zeigen:

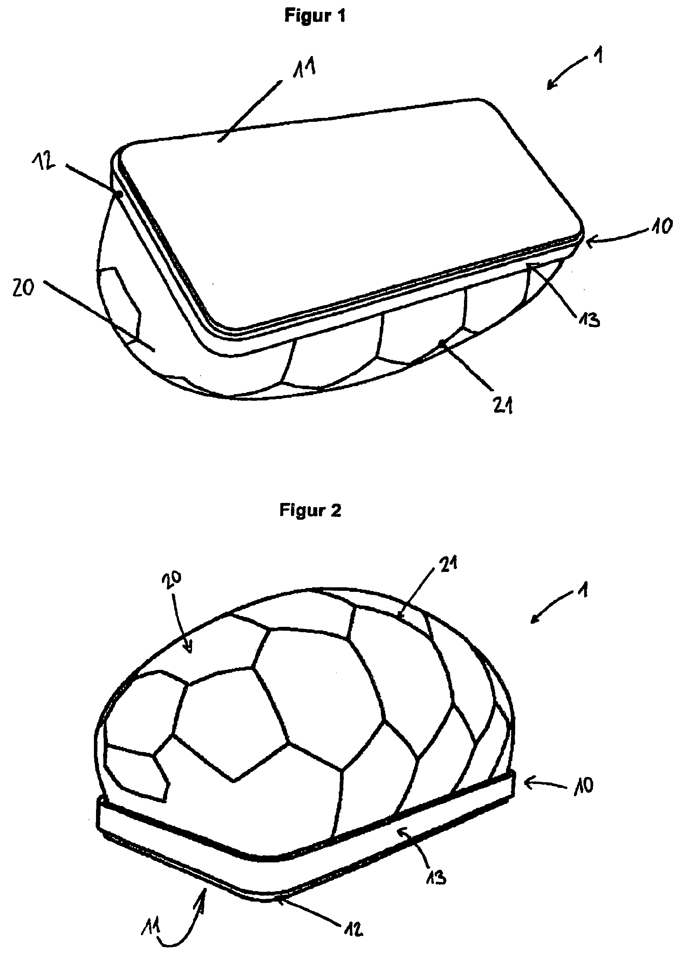

- Figur 1:: eine perspektivische Ansicht einer Ausführungsform des erfindungsgemäßen Halterungssystems,
- Figur 2:: eine weitere perspektivische Ansicht derselben Ausführungsform,

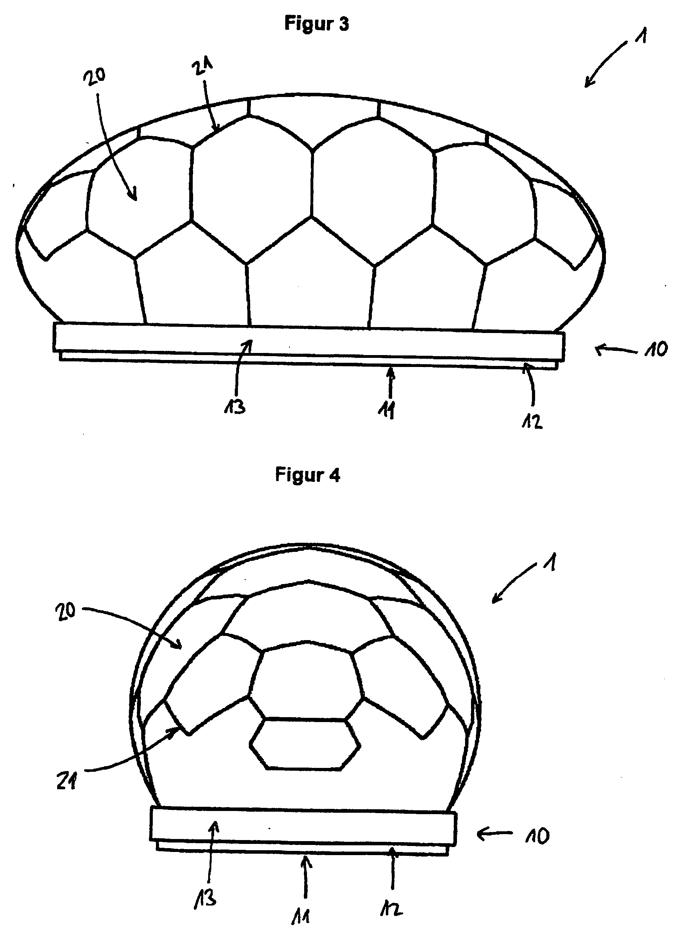

- Figur 3:: eine Vorderansicht derselben Ausführungsform,
- Figur 4:: eine Seitenansicht derselben Ausführungsform, und

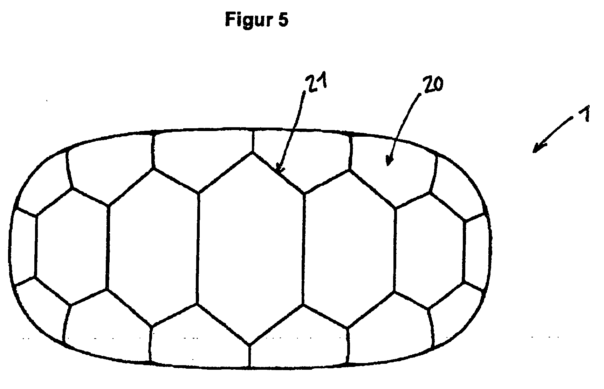

- Figur 5:: eine Draufsicht derselben Ausführungsform.

Die in den Figuren dargestellte Ausführungsform des erfindungsgemäßen Halterungssystems weist eine Halterung 10 sowie ein plastisch verformbares Kissen 20 auf. Das Kissen 20 weist als Überzug ein weiches, elastisches Kunststoffgewebe, einen sogenannten *"Jersey-Stoff"* auf, der an dessen Randbereichen mit der Halterung 10 vernäht ist. Selbstverständlich sind neben dem Vernähen auch andere Verbindungsarten denkbar.

Der so entstehende Innenraum ist mit Kunststoffkugeln mit einem mittleren Durchmesser von etwa 1 mm gefüllt. Selbstverständlich sind jedoch auch andere Füllmaterialien wie etwa Reis oder Hanfsamen denkbar. Der Fülldruck des Füllmaterials wird so gewählt, dass das Jersey-Gewebe leicht gespannt ist, um eine gute Formstabilität des Kissens zu gewährleisten.

Das Kissen 20 bildet das *"Stativ"* eines erfindungsgemäßen Halterungssystems, und die momentane Form des Kissens 20 und dessen Auflageposition am Untergrund ist für die Stellung der Halterung 10 und somit für die Position des gehaltenen elektronischen Gerätes verantwortlich.

Wie sich aus den Figuren erkennen lässt, hat das Kissen eine ungefähr ellipsoidförmige Gestalt, wobei eine parallel zur Längsachse des Ellipsoides verlaufende Fläche durch die Halterung 10 gebildet wird und abgeschnitten ist.

An der Außenoberfläche des Überzugs 20 ist eine Anti-Rutschbeschichtung 21 in einer bestimmten Geometrie aufgedruckt. Im abgebildeten Ausführungsbeispiel erfolgt der Aufdruck in Form eines Schildkrötenpanzers, wobei selbstverständlich auch andere Muster von der Erfindung umfasst sind. Der Aufdruck der Haftbeschichtung kann, wie in der Figur dargestellt, in dünnen Linien erfolgen. Jedoch ist auch die Ausbildung von dickeren Linien möglich. Bevorzugte Ausführungsformen umfassen Silikon- oder Latexdrucke.

Die Halterung 10 weist eine starre Basisplatte 12 auf, welche beispielsweise aus einem duroplastischen Kunststoffmaterial besteht. An der dem Kissen abgewandten Oberfläche 11 ist auf diese Basisplatte eine Schicht aus einem vorzugsweise elastischen Kunststoffmaterial aufgebracht, welche eine Oberflächenstruktur im Nanometerbereich aufweist. Diese Oberflächenstruktur besteht aus einer Vielzahl von Rillen, die durch das Anpressen einer glatten Oberfläche, wie beispielsweise einer Glas- oder Metallplatte an der Rückseite eines Smartphones zusammengedrückt werden, wobei eine Vielzahl an mikroskopisch kleinen Vakuums erzeugt wird. So kann eine Haftung eines elektronischen Gerätes an der Oberfläche 11 erreicht werden.

Die Basisplatte 10 kann ferner, wie in den Figuren dargestellt, an allen Seiten von einer durchgehenden Blende 13 umgeben sein. Diese kann dazu dienen, unschöne Übergänge zwischen dem Kissen 20 und der Halterung 10, sowie zwischen den Schichten innerhalb der Halterung 10 nach außen hin optisch zu kaschieren und kann gleichzeitig zur Haltbarkeit des Produkts sowie zur Formgebung des Kissens 20 beitragen.

Zusammenfassend ergibt sich, dass die erfindungsgemäße Halterung stabil, transportfähig, universell einsetzbar und individuell gestaltbar ist und bei der Anbringung elektronischer Geräte entscheidende Vorteile aufweist.

## Patentansprüche

1. Portables Halterungssystem (1) für Mobiltelefone und/oder Tablet-Computer,
wobei das Halterungssystem (1) eine Halterung (10) aufweist, wobei die Halterung (10) unmittelbar mit einem plastisch verformbaren Körper in Verbindung steht, oder Teil eines derartigen Körpers (20) bildet, wobei der Körper (20) ein mit Granulaten gefüllter Sack aus einem flexiblen und elastischen Gewebe ist, dessen Aussenoberfläche eine Haftbeschichtung und/oder einen Haftaufdruck (21) aufweist, **dadurch gekennzeichnet, dass** die Halterung (10) durch ein flexibles Flächenbauteil ausgewählt aus der Gruppe der dünnen Kunststoffplatten, Bleche, Leder und Kunstleder gebildet wird, an der eine flexible Kunststoffmatte angebracht ist, die wenigstens einseitig eine Adhäsionsoberfläche (11) aufweist, an der das elektronische Gerät adhäsiv und reversibel anbringbar ist.

2. Portables Halterungssystem gemäß einem der vorangehenden Ansprüche, **dadurch gekennzeichnet, dass** die Adhäsionsoberfläche (11) eine Oberflächenstruktur mit Erhebungen und/oder Vertiefungen aufweist, deren Höhe und/oder Abstand zueinander weniger als 50 µm beträgt.

3. Portables Halterungssystem gemäß einem der vorangehenden Ansprüche, **dadurch gekennzeichnet, dass** die Adhäsionsoberfläche (11) ein Haftmaterial wie insbesondere Haftsilikon aufweist oder daraus besteht.

4. Portables Halterungssystem gemäß einem der vorangehenden Ansprüche, **dadurch gekennzeichnet, dass** der Haftaufdruck (21) ein gemusterter Latexaufdruck oder Silikonaufdruck ist.

5. Portables Halterungssystem gemäß einem der vorangehenden Ansprüche, **dadurch gekennzeichnet, dass** das Kissen (20) eine im Wesentlichen ellipsoide Gestalt aufweist und die Adhäsionsoberfläche (11) der Halterung (10) im Wesentlichen parallel zur Längsachse dieses Ellipsoids verläuft.

6. Portables Halterungssystem gemäß einem der vorangehenden Ansprüche, **dadurch gekennzeichnet, dass** die Halterung (10) einen Teil der Begrenzungsfläche des Kissens (20) bildet, wobei sie mit dem Überzug des Kissens (20) verbunden ist und an der von der Adhäsionsoberfläche (11) abgewandten Seite mit dem Füllmaterial in Kontakt steht.

7. Portables Halterungssystem gemäß einem der Ansprüche 1 bis 5, **dadurch gekennzeichnet, dass** die Halterung (10) mit der Außenoberfläche des Überzugs des Kissens (20) verbunden ist und nicht direkt mit dem Füllmaterial in Kontakt steht.

8. Verwendung eines portablen Halterungssystems (1) gemäß einem der vorangehenden Ansprüche zum Anbringen eines Mobiltelefons oder eines Tablet-Computers.

## Claims

1. A portable holder system (1) for mobile telephones and/or tablet computers, wherein the holder system (1) has a holder (10), wherein
the holder (10) is directly connected to a plastically deformable body or forms part of such a body (20), wherein the body (20) has a sack filled with granules and comprising a flexible and elastic fabric whose outer surface has an adhesive coating and/or an adhesive print (21),
**characterised in that**
the holder (10) is formed by a flexible flat component selected from the group of thin plastic plates, metal sheets, leather and synthetic leather to which a flexible plastic mat is attached which has an adhesion surface (11) at least at one side to which the electronic device can be attached adhesively and reversibly.

2. A portable holder system in accordance with the preceding claim, **characterised in that** the adhesion surface (11) has a surface structure having elevated portions and/or recesses whose height/depth and/or spacing from one another amounts to less than 50 µm.

3. A portable holder system in accordance with one of the preceding claims, **characterised in that** the adhesion surface (11) comprises or consists of an adhesive materials such as in particular adhesive silicone.

4. A portable holder system in accordance with one of the preceding claims, **characterised in that** the adhesive print (21) is a patterned laser print or silicone print.

5. A portable holder system in accordance with one of the preceding claims, **characterised in that** the cushion (20) has a substantially ellipsoid shape and the adhesion surface (11) of the holder (10) extends substantially in parallel with the longitudinal axis of this ellipsoid.

6. A portable holder system in accordance with one of the preceding claims, **characterised in that** the holder (10) forms a part of the limiting surface of the cushion (20), with it being connected to the cover of the cushion (20) and being in contact with the filler material at the side remote from the adhesion surface (11).

7. A portable holder system in accordance with one of the claims 1 to 5, **characterised in that** the holder (10) is connected to the outer surface of the cover of the cushion (20) and is not directly in contact with the filler material.

8. Use of a portable holder system (1) In accordance with one of the preceding claims for attaching a mobile telephone or a tablet computer.

## Revendications

1. Système de support portable (1) pour téléphones mobiles et/ou tablettes électroniques,
le système de support (1) présentant un support (10),
le support (10) étant directement en liaison avec un corps susceptible de subir une déformation plastique, ou formant une partie d'un tel corps (20), le corps (20) étant une poche en tissu flexible et élastique remplie de matière granuleuse, dont la surface extérieure présente un revêtement adhésif et/ou une impression adhésive (21),
**caractérisé en ce que**
le support (10) est formé par un élément plan flexible choisi dans le groupe des plaques fines en matière plastique, des tôles, du cuir et du cuir artificiel, sur lequel une natte flexible en matière plastique est appliquée, qui présente au moins d'un côté une surface d'adhérence (11), sur laquelle l'appareil électronique peut être appliqué de manière adhésive et réversible.

2. Système de support portable selon l'une des revendications précédentes, **caractérisé en ce que** la surface d'adhérence (11) présente une structure de surface avec des saillies et/ou des creux, dont la hauteur et/ou la distance les séparant est de moins de 50 µm.

3. Système de support portable selon l'une des revendications précédentes, **caractérisé en ce que** la surface d'adhérence (11) présente ou est constituée d'un matériau adhésif tel qu'en particulier de la silicone adhésive.

4. Système de support portable selon l'une des revendications précédentes, **caractérisé en ce que** l'impression adhésive (21) est une impression en latex ou une impression en silicone à motifs.

5. Système de support portable selon l'une des revendications précédentes, **caractérisé en ce que** le coussin (20) présente une forme essentiellement ellipsoïdale et la surface d'adhérence (11) du support (10) s'étend essentiellement parallèlement à l'axe longitudinal de cet ellipsoïde.

6. Système de support portable selon l'une des revendications précédentes, **caractérisé en ce que** le support (10) forme une partie de la surface de délimitation du coussin (20), lequel support est relié à la housse du coussin (20) et est en contact avec la matière de remplissage du côté opposé à la surface d'adhérence (11).

7. Système de support portable selon l'une des revendications 1 à 5, **caractérisé en ce que** le support (10) est relié à la surface extérieure de la housse du coussin (20) et n'est pas en contact direct avec la matière de remplissage.

8. Utilisation d'un système de support portable (1) selon l'une des revendications précédentes pour l'application d'un téléphone mobile ou d'une tablette électronique.
